# EUROPÄISCHE PATENTANMELDUNG

(11) **EP 1 927 689 A1**
(43) Veröffentlichungstag der Anmeldung: **04.06.2008**
(21) Anmeldenummer: 07021606.4
(22) Anmeldetag: 07.11.2007
(51) Int. Cl.: D01H 7/04, D01H 7/08, D01H 1/244

(54) **Lagerung von Spindelanordnungen in Ringspinnmaschinen mit Einzelspindelantrieb**

(30) Priorität: 30.11.2006 EP 06024832
(71) Anmelder: Maschinenfabrik Rieter AG, 8406 Winterthur (CH)
(72) Erfinder: Wolf, Horst, 73037 Holzheim (DE)

(57) **Zusammenfassung**

Die Erfindung betrifft ein Spinnmaschine, enthaltend eine Spindelanordnung (1) mit einer Spindel (30) mit jeweils einem Spindeloberteil (10) als Träger für eine Spinnhülse, und einem unterhalb des Spindeloberteils (10) angeordneten Einzelantrieb aus einem in einem Lagergehäuse (11) angeordneten Elektromotor mit Rotor (4) und Stator (5), wobei der Rotor drehfest auf einem Spindeischaft (2) und der Stator (5) drehfest mit dem Lagergehäuse (11) verbunden ist, und der Spindelschaft (2) über ein oberes und unteres Lager (6, 7) im oder am Lagergehäuse (11) gelagert ist und die Spindel (30) beweglich direkt oder indirekt am Maschinengestell, insbesondere auf einer Spindelbank (15) oder einer an der Spindelbank (15) angebrachten Halterung (21), befestigt ist. Die Erfindung zeichnet sich dadurch aus, dass die Spindel (30) über ihre vertikale Erstreckung nur auf einer Höhe und oberhalb des Elektromotors mittels Befestigungsmitteln (3) direkt oder indirekt am Maschinengestell (15) beweglich befestigt ist, wobei die Befestigungsmittel (3) dergestalt sind, dass diese eine um eine Kegelfläche (73) kreisende Präzessionsbewegung der Spindel (30) zulassen, wobei der die Kegelspitze ausbildende Präzessions-Drehpunkt (9, 75) auf der Höhe der Spindelbefestigung liegt.

## Beschreibung

Die Erfindung betrifft eine Spinnmaschine, enthaltend wenigstens eine Spindel mit jeweils einem Spindeloberteil als Träger für eine Spinnhülse, und einem unterhalb des Spindeloberteils angeordneten Einzelantrieb aus einem in einem Lagergehäuse angeordneten Elektromotor mit Rotor und Stator, wobei der Rotor drehfest auf einem Spindelschaft und der Stator drehfest mit dem Lagergehäuse verbunden ist, und der Spindelschaft über ein oberes und unteres Lager im oder am Lagergehäuse gelagert ist, und die Spindel direkt oder indirekt am Maschinengestell, insbesondere auf einer Spindelbank oder einer an der Spindelbank angebrachten Halterung befestigt ist.

Ringspinnmaschinen mit Einzelspindelantrieb als Alternative zum Bandantrieb sind schon seit längerer Zeit bekannt, auch wenn sich diese bis heute in der Praxis aus verschiedenen Gründen gegenüber dem herkömmlichen Bandantrieb noch nicht durchsetzen konnten.

Dementsprechend existieren zahlreiche Publikationen auf diesem Gebiet, welche sich unter anderem mit dem Antriebskonzept oder mit der Befestigung solcher Spindelaggregate mit Einzelantrieb am Maschinengestell, d.h. an der Spindelbank befassen.

Viele der bekannten Konzepte zur Befestigung der Spindel mit Einzelantrieb an der Spindelbank nehmen jedoch keine oder nur geringe Rücksicht auf bei Drehung der Spindel auftretende Kreiselkräfte, die im Falle einer Unwucht eine Präzession der Kreiselachse hervorrufen. Unwuchten sowie die radiale Faden-Aufwindekraft sind jedoch beim Bewickeln der Spindelhülse unvermeidbar. So ergeben sich während dem Spinnen immer geringfügige Ungleichmässigkeiten, die u. a. auf das zu wickelnde Garn zurückzuführen sind, und die dann zu entsprechenden Radialkräften beim Spinnen führen. Diese Radialkräfte haben bei einer ungünstigen Konstruktion der Spindelbefestigung eine entsprechende Reibung in den Lagern des Spindelschaftes zur Folge, was sich in einem erhöhten Energiebedarf und Lager-Verschleiss äussert. Dies trifft insbesondere auf Spindeln zu, welche in einem hohen Drehzahlbereich von z. B. 25'000 bis 30'000 und bei Trichterspinnverfahren sogar bis 60'000 Umdrehungen pro Minute betrieben werden.

Die DE-A-100 27 089 beschreibt beispielsweise eine von einer Spindelbank getragene Spindel mit in einem Lagergehäuse gelagerten elektromotorischem Einzelantrieb, wobei das Lagergehäuse der Spindel über eine biegsam gestaltete Axialstütze auf der Spindelbank beweglich gelagert ist. Diese Lösung erfordert jedoch eine Bewegungsbegrenzung im oberen Spindelabschnitt, damit die hohen seitlichen Auslenkungen der Spindel im oberen Spindelabschnitt, welche durch den am Spindelfuss angeordneten Drehpunkt hervorgerufen werden, ein gewisses Mass nicht überschreiten.

Die EP-A-0 406 720 beschreibt eine Spindel einer Spinnmaschine mit elektromotorischem Einzelantrieb in einem Lagergehäuse, welches unter Zwischenschaltung von wenigstens zwei, vertikal voneinander beabstandeten Dämpfungselementen an der Spindelbank befestigt ist. Die besagte Konstruktion vermag die Kreiselkräfte wegen der Aufhängung der Spindel an der Halterung nicht in befriedigendem Masse von den Wälzlagern des Spindelschaftes zu nehmen, so dass auch hier die eingangs erwähnten Probleme auftreten.

Die DE-A-103 51 971 beschreibt eine Spindel mit einzelmotorischem Antrieb mit einem Elektromotor in einem Motorgehäuse, wobei das Motorgehäuse an mindestens zwei voneinander entfernten Stellen elastisch und dämpfend in einem äusseren Gehäuse gehalten wird. Trotz der dämpfenden Halterung der Spindel wirken nach wie vor Radialkräfte auf die Lager, welche deren Lebensdauer herabsetzen.

Der Erfindung liegt daher die Aufgabe zugrunde, eine Spindelanordnung vorzuschlagen, bei welcher die bei Präzessionsbewegungen auftretenden Radialkräfte von den Spindellagern ferngehalten werden, wobei die Spindelanordnung wirtschaftlich herstellbar und einfach in ihrer Montage sein soll.

Die Erfindung wird dadurch gelöst, dass die Spindel oberhalb des Elektromotors mittels Befestigungsmitteln direkt oder indirekt am Maschinengestell beweglich befestigt ist, wobei die Befestigungsmittel bzw. die Verbindung dergestalt sind, dass diese eine um eine Kegelfläche kreisende, vorzugsweise freie, Präzessionsbewegung der Spindel zulassen, wobei der die Kegelspitze ausbildende Präzessions-Drehpunkt auf der Höhe der Spindelbefestigung liegt.

Im Gegensatz zu einem gewöhnlichen Kreisel besitzt die Spindel bzw. Spindelanordnung aufgrund ihrer Lagerung in einem Lagergehäuse zwei Masseschwerpunkte, welche auf unterschiedlicher Höhe angeordnet sind. Ein erster Masseschwerpunkt, hier Drehmasse-Schwerpunkt genannt, ist der Masseschwerpunkt der beim Spinnprozess um die Spindelachse rotierenden Spindelmasse. Die Spindeldrehmasse vollzieht eine schnelle Drehung, d.h. mit einer Spindeldrehzahl von z. B. 25'000 U/min. Die Spindeldrehmasse umfasst sämtliche drehfest am Spindelschaft angebrachte Masse, wie z. B. Kops mit Hülse und der Rotor des Elektromotors, nicht jedoch den Stator und das Lagergehäuse.

Ein zweiter Masseschwerpunkt, hier Präzessionsmasse-Schwerpunkt genannt, ist der Masseschwerpunkt der präzessierenden Spindelmasse. Diese Präzessionsbewegung vollzieht eine langsame Drehung um den Präzessions-Drehpunkt. Diese PräzessionsMasse beinhaltet sämtliche Masse, welche über die besagten elastischen Befestigungsmittel direkt oder indirekt am Maschinengestell festgelegt ist. Diese umfasst unter anderem die rotierende Spindelmasse sowie den Stator-Teil des Elektromotors, die kompletten Lagerung sowie auch das Lagergehäuse. Die Präzessionsmasse ist also grösser als die Spindeldrehmasse.

Da die gegenüber der Spindeldrehmasse zusätzliche Präzessionsmasse im unteren Spindelabschnitt im Bereich des Elektromotors angeordnet ist, liegt der Präzessionsmasse-Schwerpunkt tiefer als der Spindeldrehmasse-Schwerpunkt. Daher ist das Massenträgheitsmoment J_{S} für die Spindeldrehung kleiner als das Massenträgheitsmoment J_{P} für die Drehung der Präzessionsbewegung.

Der Präzessions-Drehpunkt liegt nun bei vollem Kops bevorzugt auf der Höhe oder oberhalb des Präzessionsmasse-Schwerpunktes. Der Präzessions-Drehpunkt liegt bei vollem Kops bevorzugt weniger als 11 %, vorteilhaft weniger als 7 %, insbesondere weniger als 3 % der Gesamtspindellänge oberhalb des Präzessionsmasse-Schwerpunktes. Die Gesamtspindellänge wird durch die Längsausdehnung zwischen dem oberen und unteren Ende des Spindelschaftes definiert.

Der Präzessions-Drehpunkt kann jedoch bei vollem Kops auch unterhalb des Präzessionsmasse-Schwerpunktes angeordnet sein. Der Präzessions-Drehpunkt liegt in diesem Falle bei vollem Kops bevorzugt weniger als 11 %, vorteilhaft weniger als 7 %, insbesondere weniger als 3 % der Gesamtspindellänge unterhalb des Präzessionsmasse-Schwerpunktes.

Falls notwendig, kann an der Spindel, insbesondere an ihrem unteren Abschnitt, zwecks Festlegung der Höhe des Präzessionsmasse-Schwerpunktes gezielt Präzessionsmasse hinzugefügt werden, z. B. mittels am Lagergehäuse angebrachten Gewichten.

Die Spindel ist über ihre vertikale Erstreckung lediglich in einer horizontalen Ebene mittels elastischen Befestigungs- bzw. Verbindungsmittel befestigt. Das darunter liegende Lagergehäuse weist keine weiteren Berührungspunkte mit Bauteilen des Maschinengestells oder mit diesem selbst auf.

Durch die Anordnung der Befestigung oberhalb des Motors, welcher eine erste Präzessionsmasse ausbildet und unterhalb des Spindeloberteils mit Kops, welches eine zweite Präzessionsmasse ausbildet, wird eine optimale Massenverteilung um den Präzessions-Drehpunkt erreicht.

Die Lager sind zusammen mit dem Antrieb bevorzugt in einer Baueinheit, welche durch das, vorzugsweise zylinderförmige, Lagergehäuse gegen aussen abgeschlossen ist, untergebracht. In Bezug auf die Position der Spindellager gegenüber dem Elektromotor kommen drei mögliche Ausführungsformen in Betracht:

Gemäss einer ersten Ausführung ist das obere Lager oberhalb des Elektromotors bzw. Rotors, z. B. am oberen Ende des Lagergehäuses, und das untere Lager unterhalb des Elektromotors bzw. Rotors, z. B. am unteren Ende des Lagergehäuses, angeordnet. Auf diese Weise ist die bewegte Masse des Elektromotors idealerweise zwischen zwei Lagern angeordnet. Das obere Lager ist bevorzugt im oberen Abdeckelement des Lagergehäuses festgelegt bzw. in dieses integriert und insbesondere von aussen zugänglich. Das untere Lager ist bevorzugt im unteren Abdeckelement festgelegt bzw. in dieses integriert und insbesondere von aussen zugänglich. Zwecks Austausch beschädigter Lager können diese entweder zusammen mit dem Abdeckelement als Einheit ausgetauscht werden oder, falls die Lager von aussen zugänglich sind, von aussen aus dem Abdeckelement ausgebaut werden.

Gemäss einer zweiten Ausführung sind das obere und untere Lager unterhalb des Elektromotors bzw. Rotors angeordnet. Die beiden Lager können gemäss dieser Ausführung in einer in sich geschlossenen Lager-Baugruppe angeordnet sein, welche sich als Einheit lösbar an der Spindel festlegen und entfernen lässt. Auf diese Weise wird der einfache Austausch von beschädigten Lagern ermöglicht, was bei Lagern mit Lebensdauerschmierung mit entsprechend beschränkter Lebensdauer von Bedeutung ist.

Gemäss einer dritten Ausführung sind das obere und untere Lager oberhalb des Elektromotors bzw. Rotors angeordnet. In diesem Falle ist der Elektromotor bzw. der Rotor fliegend aufgehängt. Analog zur zweiten Ausführung, können die beiden Lager auch gemäss dieser Ausführung in einer in sich geschlossenen Baugruppe angeordnet sein.

Das obere Lager ist, insbesondere bei der ersten und dritten Ausführungsform, bevorzugt auf der Höhe oder unterhalb der Spindelbefestigung angeordnet.

Der Motor kann ein Drehstrommotor sein, ist jedoch bevorzugt ein Gleichstrommotor, insbesondere ein BLDC Motor (Bürstenloser Gleichstrommotor) mit Hallsensor. Das Lagergehäuse entspricht vorzugsweise gleichzeitig dem Motorgehäuse. Es ist jedoch auch möglich, dass der Elektromotor in einem separaten Motorgehäuse untergebracht ist, welches wiederum ins Lagergehäuse integriert ist, wobei hier der Spindelschaft durch eine durchgehende, vorzugsweise zylindrisch, Öffnung im Motorgehäuse durchgeführt und an diesem drehfest festgelegt ist. D. h. der Stator kann sowohl direkt als auch indirekt drehfest mit dem Lagergehäuse verbunden sein.

Die Spindel ist direkt oder indirekt am Maschinengestell befestigt. Die Befestigung kann über das Lagergehäuse bzw. über ein oberes Abdeckelement des Lagergehäuses erfolgen.

Unter den Begriff Maschinengestell sollen hier im weitesten Sinne Teile der Spinnmaschine fallen, welche dazu ausgelegt sind, die Spindeln zu haltern, wie z. B. die Spindelbank. Der Begriff indirekt bezieht sich auf Zwischenbauteile, wie Halterungen, welche einerseits die Spindel beweglich haltern und andererseits unbeweglich am Maschinengestell befestigt sind. Die Zwischenbauteile sollen so ausgelegt sein, dass diese wie auch die Bauelemente des Maschinengestells durch die aus der Unwucht der Spindel bzw. durch die Fadenzugkräfte hervorgerufenen Präzessions- bzw. Radialkräfte nicht in Bewegung versetzt werden. Die Zwischenbauteile können jedoch durchaus auch über entsprechende Dämpfungselemente am Maschinengestell festgelegt sein. Die Dämpfungselemente nehmen jedoch keine Kreiselkräfte auf, sondern dienen bloss zur Vibrationsdämpfung.

Die Befestigungsmittel enthalten elastische, insbesondere gummi- und/oder federelastische Verbindungselemente. Die Befestigungsmittel besitzen ein bleibendes Rückstellvermögen, so dass sich das Spindelzentrum und die senkrechte Spindelstellung über die Zeit nicht verändern. Die Befestigungsmittel können Gummi- bzw. Elastomer- oder Federelemente umfassen. Eine Kombination von werkstoffelastischen und federelastischen Elementen ist auch denkbar. Die Elemente sind bevorzugt ringförmig ausgebildet. Sie können auch in Form von Ringsegmenten vorliegen. Die Verbindungselemente können z. B. mit den Verbindungspartnern stoffschlüssig verbunden sein, z. B. mittels Vulkanisierung.

Die Spindel ist in einer besonders bevorzugten Ausführungsform über eine als Aussengehäuse ausgebildete Halterung mit der Spindelbank verbunden, wobei die Spindel mit ihrem Lagergehäuse vorzugsweise konzentrisch in das Aussengehäuse eingelassen und über die Befestigungsmittel gegenüber dem Aussengehäuse schwenkbar verbunden ist, wobei zwischen Aussengehäuse und Lagergehäuse ein Zwischenraum ausgebildet ist, welcher die Ausübung einer freien, ungestörten Präzessionsbewegung der Spindel zulässt. Dieser ringförmige Zwischenraum kann eine Breite von 1 bis 5 mm, insbesondere von 1.5 bis 3 mm aufweisen. Das Lager- wie auch das Aussengehäuse sind bevorzugt zylinderförmig ausgebildet. Das Aussengehäuse ist zweckmässig starr und unbeweglich mit der Spindelbank oder einem anderen Bauteil des Maschinengestells verbunden.

Das Aussengehäuse ist bevorzugt unter Ausbildung einer geschlossenen Kammer in seinem unteren Abschnitt über einen Gehäuseboden und in seinem oberen Abschnitt über eine den Spindelschaft umgebende Gehäuseabdeckung verschlossen. Das Aussengehäuse kann auch unter Ausbildung einer gegen oben offenen, topfartigen Aufnahme lediglich mit einem Gehäuseboden versehen sein.

Der Zwischenraum zwischen Lagergehäuse und Aussengehäuse kann wenigstens in seinem unteren Abschnitt mit einem Dämpfungsmittel ausgefüllt sein. Das Dämpfungsmittel dient der Dämpfung der Präzessionsbewegung des Lagergehäuses. Das Dämpfungsmittel kann ein Fluid, insbesondere eine niedrig- bis hochviskose Flüssigkeit, wie z. B. ein Dämpfungsöl oder eine pastöse Flüssigkeit sein. Der Zwischenraum kann Mittel enthalten, welche die Zirkulation bzw. Bewegung des Dämpfungsmittels verlangsamen und auf diese Weise die Dämpfungswirkung verstärken. Solche Mittel können z. B. in Form eines spiralförmigen Einsatzes oder in Form eines Einsatzes mit labyrinthischer Kammerstruktur oder eines offenzelligen Schaumstoffes vorliegen. Zum Offenbarungsbereich sollen überdies auch Dämpfungsmittel in Form offen- und/oder geschlossenzelliger Schaumstoffe, z. B. PUR-Schaumstoffe, gehören, welche zwischen dem Lager-und Aussengehäuse angeordnet sind.

Die Spindel mit dem Lagergehäuse und das Aussengehäuse bilden zusammen mit den Befestigungsmitteln bevorzugt eine vormontierte Baueinheit, eine sogenannte Spindelanordnung aus, welche am Maschinengestell mit wenig Aufwand montierbar ist, wobei das Aussengehäuse Anbindungspunkte zur unbeweglichen Befestigung desselbigen am Maschinengestell aufweist. Das Aussengehäuse kann mit seinem unteren Ende auf die Spindelbank aufgesetzt und mit dieser z. B. verschraubt oder verschweisst sein. Die Spindelanordnung soll jedoch gegenüber der Ringbank zentrierbar am Maschinengestell festlegbar sein. Die Baueinheit ist vorzugsweise inkl. Spindelaufhängung über das Aussengehäuse staubdicht verschlossen.

Obwohl das Aussengehäuse zusammen mit der Spindel eine, insbesondere vollständig geschlossene, Baueinheit ausbilden kann, darf nicht vergessen werden, dass das nicht durch Kreiselkräfte bewegte Aussengehäuse in erster Linie die Funktion einer Halterung bzw. eines Zwischenbauteils wahrnimmt und nicht Teil der durch Kreiselkräfte auslenkbaren Spindel ist.

Sofern die Spindel keine Kapselung enthält, kann die Spindel mit ihrem Lagergehäuse oder Aussengehäuse auch in eine kreisförmige Öffnung an der Spindelbank eingelassen sein.

Da die elastischen Befestigungsmittel nur beschränkt axiale Zug- und Druckkräfte aufnehmen können, ist in einer vorteilhaften Weiterbildung der Erfindung zwischen dem Lagergehäuse und dem Aussengehäuse eine Begrenzungs-Einrichtung, z. B. in Form eines Anschlags, vorgesehen, bei welcher die Spindel mit dem Lagergehäuse bei übermässiger axialer Zug- oder Druckbelastung anschlägt und auf diese Weise eine weiterführende axiale Belastung der elastischen Befestigungselemente verhindert. Solche axialen Kräfte treten z. B. beim Doffvorgang auf. Die Spindel sollte sich beim Doffen z. B. nicht mehr als 1 mm in axialer Richtung bewegen.

In einer bevorzugten Weiterbildung der Erfindung enthält die Spindelanordnung jedoch zwecks Reduktion des Lufttransportes durch die rotierende Spindel eine Kapselung, welche jeweils die Spindelanordnung unterhalb der aktuellen Kops-Fadenablage umschliesst. Die Kapselung ist bei einer Ringspinnmaschine z. B. an der Unterseite der Ringbank befestigt. Die Kapselung kann zylindrisch oder konisch mit gegen unten zunehmendem Durchmesser ausgebildet sein. Anstelle einer konischen Ausbildung kann die Kapselung auch einen zylindrischen Grundkörper mit einer trichterförmigen Erweiterung in ihrem unteren Endabschnitt aufweisen.

Das obere Spindellager ist bevorzugt ein Wälzlager. Das untere Spindellager ist bevorzugt ebenfalls ein Wälzlager, wobei es sich in diesem Fall um ein kombiniertes Radial/Axial-Lager handelt. Das untere und obere Lager kann ein Wälzlager desselben Typs oder eines unterschiedlichen Typs sein.

Das oder die Wälzlager kann ein Kugellager, Doppelkugellager, Nadellager, Tonnenlager oder ein Kegellager sein. Ferner kann das oder die Wälzlager ein Hybridlager mit elektrisch nicht-leitenden Wälzkörpern sein. Solche Wälzkörper können z. B. aus einem nicht-Metall Werkstoff, wie Keramik oder Kunststoff, sein. Der Keramik kann ein Oxid-oder Nicht-Oxid-Keramik sein, wie z. B. Siliziumnitrit. Hybrid-Lager sind bevorzugt Kugellager. Der Aussen- und/oder Innenring des Lagers kann elektrisch isoliert sein, z. B. mittels einer nicht-leitenden Beschichtung. Die Hybridlager weisen den Vorteil auf, dass keine Lagerströme auftreten, welche aufgrund induktiver Einflüsse durch den benachbarten Elektromotor entstehen können. Die Lager können eine Öl- oder Fettschmierung aufweisen, welche vorzugsweise eine Lebensdauerschmierung enthalten. Dies können z. B. im Fachhandel erhältliche Doppel-V- oder Doppel-Z-Lager sein. Das Lagerspiel in den Lagern soll so klein wie möglich gewählt werden.

Die Erfindung betrifft überdies eine Spindeleinheit, insbesondere für eine Spinnmaschine der zuvor beschriebenen Art, enthaltend eine Spindel mit einem Spindeloberteil, als Träger für eine Garn- oder Zwirn-Hülse, und einem unterhalb des Spindeloberteils angeordneten Einzelantrieb aus einem in einem Lagergehäuse angeordneten Elektromotor mit Rotor und Stator, wobei der Rotor drehfest auf einem Spindelschaft und der Stator direkt oder indirekt drehfest mit dem Lagergehäuse verbunden ist, und der Spindelschaft über ein oberes und unteres Lager im oder am Lagergehäuse gelagert ist.

Die Spindeleinheit zeichnet sich dadurch aus, dass diese eine Halterung enthält und oberhalb des Elektromotors mittels Befestigungsmitteln beweglich mit der Halterung verbunden ist, wobei die Befestigungsmittel bzw. die Verbindung dergestalt sind, dass diese eine um eine Kegelfläche kreisende Präzessionsbewegung der Spindel in oder an der Halterung zulassen, wobei der die Kegelspitze ausbildende Präzessions-Drehpunkt auf der Höhe der Spindelbefestigung liegt. Die Spindeleinheiten können ebenfalls die in dieser Beschreibung im Zusammenhang mit einer Spinnmaschine offenbarten Merkmale, Abwandlungen und Ausführungsformen von Spindeln bzw. deren Halterungen aufweisen.

Im Gegensatz zu bekannten Lösungen, nach welchen die Spindel mittels elastischen Befestigungsmittel über eine Schulter am Maschinengestell aufliegt, ist die Spindel gemäss vorliegender Erfindung bevorzugt über die Befestigungsmittel von unten oder seitlich an einem Zwischenbauteil bzw. einer Halterung oder direkt am Maschinengestell aufgehängt. Bei einer seitlichen Befestigung ist die Spindel durch eine Öffnung bzw. Durchgang am Maschinengestell oder einem Zwischenbauteil geführt, wobei zwischen den beiden Bauteilen ein umlaufender Spalt ausgebildet wird, in welchem die elastischen Befestigungsmittel angeordnet sind.

Die Befestigungsmittel zur Aufhängung der Spindel sollen möglichst in einer horizontalen Ebene angeordnet sein. Auf diese Weise verhält sich die Spindel im Betrieb praktisch wie ein Kreisel mit freier Aufhängung. Eine solche Aufhängung, welche idealerweise einer quasi kardanischen Aufhängung entsprechen soll, bietet den Vorteil, dass keine Resonanz-Drehzahlen und keine Wellendurchbiegung auftreten.

Die Spindel berührt das Maschinengestell über seine vertikale Ausdehnung nur an einer Stelle, welche dem Ort der Aufhängung entspricht. Dieser Ort ist gleichzeitig der Drehpunkt der Präzessionsbewegung der Spindel. Die Spindel darf ausser im Drehpunkt das Maschinengestell bzw. Zwischenbauteile oder Halterungen an keiner anderen Stelle berühren oder mit diesem verbunden sein, auch nicht über gummi- oder federelastische Dämpfer. Eine Ausnahme bildet gegebenenfalls das viskose Dämpfungsmittel, welches zwischen dem Lagergehäuse und dem Aussengehäuse angeordnet sein kann.

Aufgrund der beweglichen Lagerung des Lagergehäuses kann der Spindelschaft den auftretenden Radialkräften nachgeben, so dass die Spindel sich im Sinne der vorstehend erwähnten Präzession als freier Kreisel um eine Kegelfläche bewegen kann und damit die sonst auftretenden Reibungskräfte in den Lagern weitestgehend vermieden werden. Unwuchten werden durch die Präzessionsbewegung kräftemässig ausgeglichen, so dass keine zusätzlichen Lagerkräfte entstehen. Dies äussert sich in einem entsprechend verringerten Verschleiss der Lager sowie geringeren Energiebedarf für den Antrieb des Elektromotors. Die Beweglichkeit des Lagergehäuses wird durch die elastische Befestigung erreicht, die aufgrund ihrer Nachgiebigkeit dem Spindelschaft eine entsprechende radiale Ausweichmöglichkeit gibt und eine Auslenkbewegung ermöglicht. Die auf die Spindel wirkenden Radialkräfte werden praktisch reibungsfrei vom Spindelschaft über die Wälzlagerung auf das Lagergehäuse übertragen, welches somit die Präzessionsbewegung des Spindelschaftes entsprechend mitträgt.

Da der Stator als Teil der Präzessionsmasse zusammen mit dem Rotor die Präzessionsbewegung ausführt, bleibt der Luftspalt zwischen Rotor und Stator im Betrieb im wesentlichen konstant. Entsprechend kann der Elektromotor mit einem kleinen Luftspalt zwischen Rotor und Stator kompakt konstruiert werden.

Die bisher bekannten Systeme des Einzelspindelantriebs erlauben maximale Drehzahlen von ca. 25'000 bis 30'000 U/min. Beim Trichterspinnen wird mit Drehzahlen von 60'000 U/min oder mehr gerechnet. Die erfindungsgemässe Spindelanordnung trägt diesen hohen Drehzahlbereichen Rechnung. So ergibt sich mit der erfindungsgemässen Lagerung des Lagergehäuses eine entscheidende Reibungsverringerung und damit Verringerung des Energiebedarfs und des Verschleisses, sowie eine markante Erhöhung der Produktionsgeschwindigkeit der betreffenden Spinnmaschine. Der erfindungsgemässe Einzelspindelantrieb eignet sich für sämtliche mit Spindeln betriebenen Spinnmaschinen, wie z. B. Ring-, Trichter- oder Schlaufenspinnmaschinen. Ferner eignet sich der erfindungsgemässe Einzelspindelantrieb auch für Zwirn- und Doppeldrahtzwirnmaschinen.

Die Erfindung wird nachfolgend anhand der Figuren 1 bis 6 näher erläutert. Es zeigen:
- Fig. 1:: eine schematische Darstellung einer erfindungsgemässen Spindel mit quasi kräftefreier Aufhängung;
- Fig. 2:: einen Querschnitt durch eine erste Ausführungsform einer erfindungsgemässen Spindelanordnung;
- Fig. 3:: einen Querschnitt durch eine spezifische Ausführungsform einer elastischen Aufhängung der Spindel;
- Fig. 4a, 4b:: einen Querschnitt durch zwei weitere Ausführungsformen einer Spindelaufhängung;
- Fig. 5:: einen Querschnitt durch eine zweite Ausführungsform einer erfindungsgemässen Spindelanordnung;
- Fig. 6:: einen Querschnitt durch eine dritte Ausführungsform einer erfindungsgemässen Spindelanordnung.

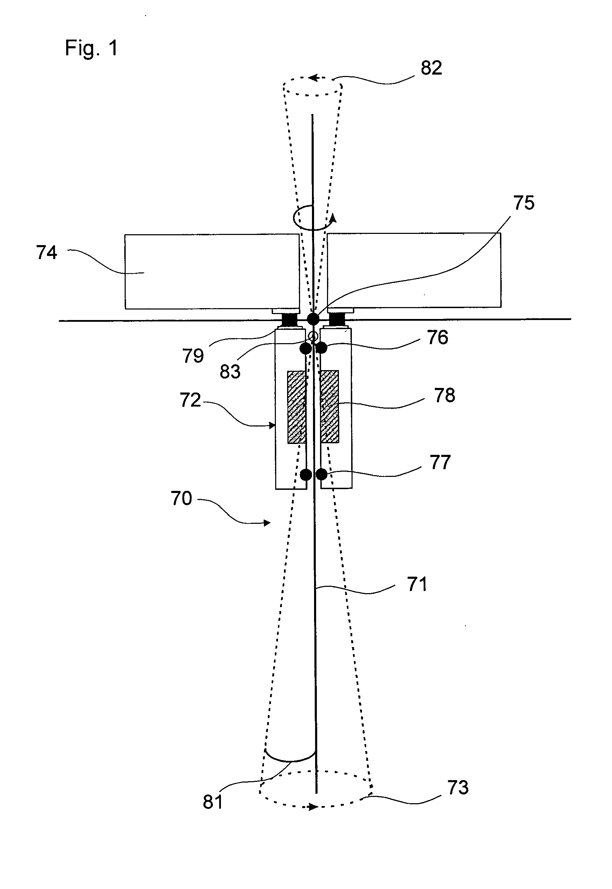

Die schematische Darstellung einer Spindelanordnung 70 gemäss Fig. 1 mit beweglicher, insbesondere elastischer, Aufhängung 79 entspricht bezüglich Wirkprinzip einem Kreisel mit kräftefreier, quasi kardanischer Aufhängung. Die Spindel enthält eine frei gelagerte Drehachse 71, welche dem Spindelschaft entspricht. Der Spindelschaft wird durch einen in einem Lagergehäuse untergebrachten Elektromotor 78 angetrieben. Oberhalb und unterhalb des Elektromotors 78, jedoch unterhalb der Aufhängung ist eine obere und untere Lagerung 76, 77 der Spindel vorgesehen. Die Spindel samt Kops, Lagergehäuse mit Elektromotor und Lagerung bildet eine Präzessionsdrehmasse 72 mit einem Präzessionsmasse-Schwerpunkt 83 aus, welcher leicht unterhalb des Präzessionsdrehpunktes 75 liegt. Die Spindel ist über die Aufhängung 79, z. B. über gummielastische Elemente, am Maschinengestell 74, z. B. an der Spindelbank oder über eine an der Spindelbank befestigte Halterung, angebracht. Auf der Höhe dieser Aufhängung 79 liegt der feststehende Präzessions-Drehpunkt 75, um welchen die sich drehende Spindel bei Unwucht ähnlich einem Kreisel längs einer Kegelfläche 73 rotiert. Der Präzessions-Drehpunkt 75 bildet die Kegelspitze aus. Da der Drehpunkt 75 nicht an der Spitze oder am Fuss der Spindel, sondern zwischen den beiden Endpunkten liegt, bildet die präzessierende Spindel je eine obere 82 und dieser entgegen gesetzte untere Kegelfläche 73 aus, deren Kegelspitzen sich im Präzessions-Drehpunkt 75 treffen. Der Pendelausschlag der Spindel ist durch den Winkel 81 dargestellt und ist von der stärke der Präzessionsbewegung bzw. von der Stärke der Unwucht abhängig. Die maximale Auslenkung des unteren Endpunktes der Spindel beträgt dabei etwa 1 bis 2 mm.

Die Spindelanordnung soll derjenigen eines freien Kreisels möglichst nahe stehen. Ein freier Kreisel zeichnet sich unter anderem dadurch aus, dass sein Präzessions-Drehpunkt im Präzessionsmasse-Schwerpunkt liegt. Liegt die elastische Aufhängung des Kreisels nun in diesem Präzessionsmassen-Schwerpunkt, so ist der Kreisel kräftefrei. Die vertikale Lage des Päzessionsmasse-Schwerpunktes einer Spindelanordnung verlagert sich jedoch über einen Spinnprozess hinweg während der Kopsreise wegen der zunehmenden Kopsmasse nach oben. Daher erweist es sich als zweckmässig, den Präzessions-Drehpunkt so zu platzieren, dass sich der Präzessionsmasse-Schwerpunkt bei vollem Kops etwas unterhalb des Präzessionsdrehpunktes befindet. D. h. die elastische Drehpunkt-Befestigung der Spindel am Maschinengestell sollte knapp über dem Präzessionsmasse-Schwerpunkt bei vollem Kops liegen, um dem Ideal "kräftefreier Kreisel" möglichst nahe zu kommen.

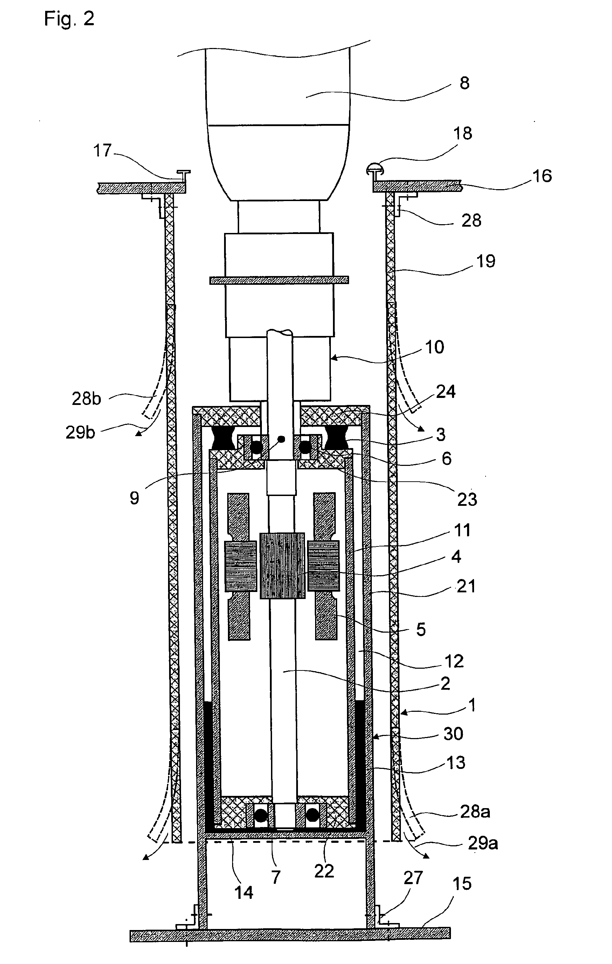

Die Fig. 2 zeigt einen Querschnitt durch eine erste Ausführungsform einer erfindungsgemässen Spindelanordnung 1 einer Ringspinnmaschine. Die Ringspinnmaschine enthält eine Ringbank 16 mit einem Ring 17 und einem auf diesem freilaufenden Ringläufer 18. Die Spindel 30 enthält ein Spindeloberteil 10 mit einer Klemmkrone und einem eine Hülse zur Ausbildung eines Kopses 8 tragenden Spindeldorn. Unterhalb des Spindeloberteils 10 ist ein Elektromotor mit einem drehfest an einem Spindelschaft 2 angeordneten Rotor 4 und einem drehfest mit einem Lagergehäuse 11 verbundenen Stator 5 angeordnet. Oberhalb des Rotors 4 und unterhalb des Spindeloberteils 10 ist ein, als Wälzlager ausgebildetes oberes Lager 6 angeordnet. Unterhalb des Rotors 4 ist ein, ebenfalls als Wälzlager ausgebildetes unteres Lager 7 angeordnet. Das Lagergehäuse 11 ist als geschlossener rohrförmiger Hohlkörper ausgebildet und schliesst den Elektromotor ein. Das Lagergehäuse ist unten über eine auf der Höhe des unteren Lagers angeordneten untere Abdeckung 22 und oben durch eine auf der Höhe des oberen Lagers 6 angeordnete obere Abdeckung 23 verschlossen. Das obere und untere Lager 6, 7 sind in aussen liegenden Vertiefungen der zugehörigen Abdeckungen 22, 23 eingelassen und mit diesen drehfest verbunden, derart dass die Zugänglichkeit zu den Lagereinheiten ohne Öffnen des Lagergehäuses 11 von aussen gewährleistet ist.

Die Spindel 30 ist mit ihrem Lagergehäuse 11 in ein, vorzugsweise zylindrisches Aussengehäuse 21 eingelassen und über elastische Befestigungsmittel 3 an diesem etwa auf der Höhe des oberen Lagers 6 gegenüber dem Aussengehäuse 21 beweglich befestigt. Der Drehpunkt 9 der Präzessionsbewegung liegt somit etwa auf der Höhe des oberen Lagers. Das Lagergehäuse 11 und das Aussengehäuse 21 bilden sowohl seitlich als auch bodenseitig einen spaltförmigen Hohlraum 12 aus, welcher eine kreisende Präzessionsbewegung des Lagergehäuses 11 im mittels Winkelelementen 27 starr an der Spindelbank 15 befestigten Aussengehäuse 21 zulässt. Das Aussengehäuse 21 ist ebenfalls als geschlossener rohrförmiger Hohlkörper ausgebildet und schliesst das Lagergehäuse 11 inklusive das obere und untere Lager 6, 7 ein. Das Aussengehäuse 21 ist unten durch einen Gehäuseboden 14 und oben durch einen Gehäusedeckel 24 abgeschlossen.

Die elastischen Befestigungsmittel 3 sind zwischen dem oberen Abdeckelement 23 des Lagergehäuses 11 und dem Gehäusedeckel 24 des Aussengehäuses 21 angeordnet und verbinden diese miteinander. Die elastischen Befestigungsmittel 3 sind gummielastische, den Spindelschaft umlaufende Ringkörper. Die Spindel 30 ist von unten am Aussengehäuse 21 bzw. an dessen Gehäusedeckel 24 in Ausführung einer Aufhängung befestigt, d.h. der Anbindungspunkt zwischen dem Befestigungsmittel 3 und dem Lagergehäuse 11 liegt unterhalb des Anbindungspunktes zwischen dem Befestigungsmittel 3 und Aussengehäuse 21.

Der Zwischenraum 12 zwischen Lagergehäuse 11 und Aussengehäuse 21 kann in seinem unteren Abschnitt bedarfsweise mit einem Dämpfungsöl 13 angefüllt sein. Das Dämpfungsöl kann, falls notwendig, eine Dämpfung der innerhalb des Aussengehäuses durch die Spindel ausgeführten Präzessionsbewegungen herbeiführen.

Unterhalb der Ringbank 16 ist zwecks Reduktion des Lufttransportes durch den Kops während des Spinnverfahrens vorteilhaft eine an, d.h. auf der Unterseite der Ringbank 16 befestigte zylindrische Kapselung 19 angeordnet, welche den unterhalb der Ringbank 16 befindlichen Teil der Spindel 30 umgibt. Die Kapselung 19 kann z. B. über Winkelelemente 28 an die Ringbank 16 verschraubt sein. Die Kapselung kann auch eine Bördelung aufweisen, über welche sie am Ringrahmen befestigt ist. Die Kapselung 19 weist entsprechend einen grösseren Durchmesser auf als das Aussengehäuse 21. Zwischen Kapselung 19 und Aussengehäuse 21 wird bevorzugt ein Luftspalt ausgebildet.

Die Kapselung 19 kann auch einen trichterförmigen Endabschnitt 28a aufweisen (gestrichelt dargestellt). Diese Geometrie erleichtert den Austritt der Luft 29a nach unten. Dies ist insbesondere dann von Bedeutung, wenn der trichterförmige Endabschnitt 28b der Kapselung während der Kopsreise auf der Höhe des oberen Endes des Lagergehäuse zu liegen kommt. Durch die Trichterform wird hier ein grösserer Luftdurchlass nach unten geschaffen, welcher zusammen mit den durch die Kopsdrehung verursachten Luftbewegungen, ähnlich dem Kamineffekt, einen Saugeffekt 29b nach unten bewirkt. Dank diesem Saugeffekt wird Schmutz, insbesondere Faserflug, nach unten aus der Spindelanordnung abgeführt. Die beschriebene Kapselung mit ihren Ausführungsformen ist selbstverständlich nicht auf dieses eine Ausführungsbeispiel beschränkt. Vielmehr ist die beschriebene Kapselung ganz allgemein und losgelöst von vorliegender Aufhängung bzw. Befestigung der Spindel mit Spindelmotor für Spinnmaschinen mit Einzelspindelantrieb anwendbar. Im weiteren haben die beschriebenen Ausführungsformen gemäss den Fig. 1 bis 6 auch Gültigkeit auf Spindelanordnungen ohne Kapselung.

Das Lagergehäuse 11 mit dem darin gelagerten Elektromotor bildet zusammen mit dem Aussengehäuse 21 und dem Spindeloberteil 10 eine Baueinheit aus, welche über entsprechende Befestigungsmittel 27, z. B. über verschraubte Winkelelemente, starr mit der Spindelbank 15 verbunden ist.

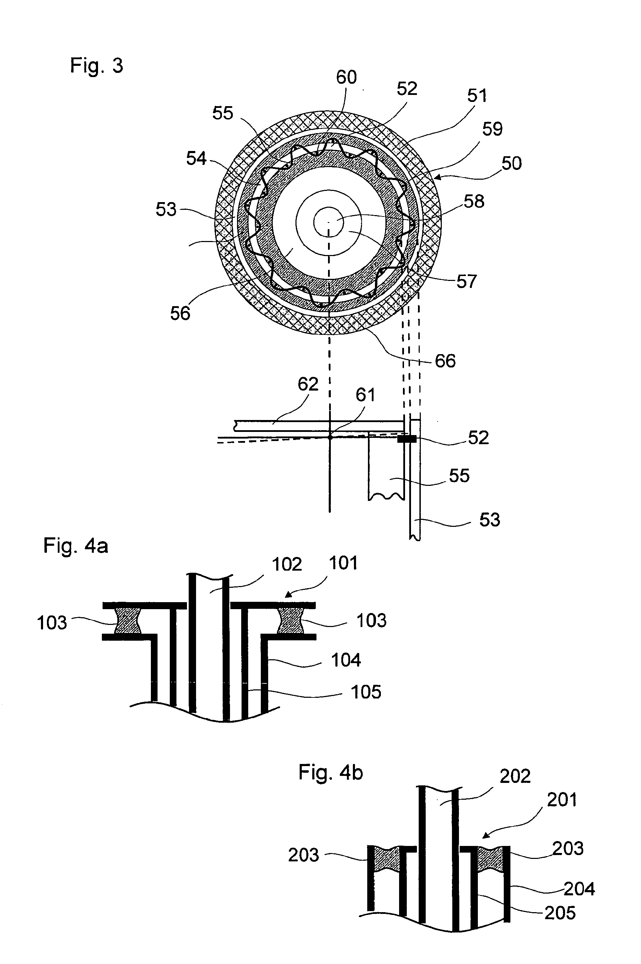

Das ringförmige elastische Befestigungsmittel 50 gemäss Fig. 3 enthält ein wellenförmig und horizontal um den Spindelschaft 58 verlaufendes Stahlfederelement 52. Das Stahlfederelement 52, welches z. B. draht- oder bandförmig ausgebildet sein kann, ist jeweils mit seinen äusseren Bogenabschnitten in eine Nut am Aussengehäuse 53 oder einem mit diesem verbundenen Bauteil geführt und axial gehalten. Mit seinen inneren Bogenabschnitten ist das Stahlfederelement 52 jeweils in eine Nut an der Spindel bzw. am Lagergehäuse 55 oder einem mit diesem verbundenen Bauteil geführt und axial gehalten. Das Stahlfederelement 52 umläuft in wellenförmiger Auslenkung stiftförmige Elemente 59, 60, welche in den besagten Nuten angeordnet sind und das Stahlfederelement 52 in radialer Richtung halten. Die Stiftelemente 59, 60 verhindern insbesondere die radiale Verschiebung des Stahlfederelements 52 zur Mitte hin. Das Aussengehäuse 53 und das Lagergehäuse 55 bilden einen Zwischenraum 54 aus, welcher die notwendige Bewegungsfreiheit für die Präzessionsverschiebung gewährleistet. Die Halterung des Stahlfederelements 52 ist jedoch dergestalt, dass dieses in Umfangrichtung um die Stifte herum verschiebbar ist, so dass die Spindel aus seiner mit dem Aussengehäuse konzentrischen Lage zur Seite verschiebbar ist, indem unter Verschiebung des Stahlfederelement 52 in Umfangrichtung die Stahlfeder auf der den breiteren Spalt ausbildenden Seite eine grössere Wellenamplitude ausbildet als auf der den schmäleren Spalt ausbildenden Seite. Das Stahlfederelement 52 befindet sich auf der Höhe des Präzessions-Drehpunktes 61. Um das Aussengehäuse 53 kann fallweise eine Kapselung 51 angeordnet sein.

Fig. 4a zeigt schematisch eine weitere Ausführung einer beweglichen Befestigung der Spindel. Das Aussengehäuse 104 der Spindelanordnung 101 bildet eine Schulter aus, auf welche das oder die beweglichen Befestigungsmittel 103 aufliegen. Das Lagergehäuse 105 der Spindel bildet einen Flansch aus, welcher über die Schulter des Aussengehäuses 104 führt und dem oder den Befestigungsmitteln 103 aufliegt. Das Aussengehäuse 104 ist unbeweglich mit dem Maschinengestell verbunden. Ferner ist der Spindelschaft 102 schematisch gezeigt. Im Unterschied zur Spindelbefestigung gemäss Fig. 2 liegt hier die Spindel mit ihrem Lagergehäuse 105 über elastische Befestigungsmittel 103 dem Aussengehäuse 104 auf, d.h. der Anbindungspunkt zwischen dem Befestigungsmittel 103 und dem Lagergehäuse 105 liegt oberhalb des Anbindungspunktes zwischen dem Befestigungsmittel 103 und dem Aussengehäuse 104.

Fig. 4b zeigt schematisch eine weitere Ausführung einer beweglichen Spindelbefestigung. Die elastischen Befestigungsmittel 203 verbinden das Aussengehäuse 204 der Spindelanordnung mit dem Lagergehäuse 204 in einer seitlichen Anordnung, d.h. der Anbindungspunkt zwischen dem Befestigungsmittel 203 und dem Lagergehäuse 205 liegt zusammen mit dem Anbindungspunkt zwischen dem Befestigungsmittel 203 und dem Aussengehäuse 204 auf gleicher Höhe in einer horizontalen Ebene. Das Aussengehäuse 205 ist unbeweglich mit dem Maschinengestell verbunden. Ferner ist der Spindelschaft 202 schematisch gezeigt.

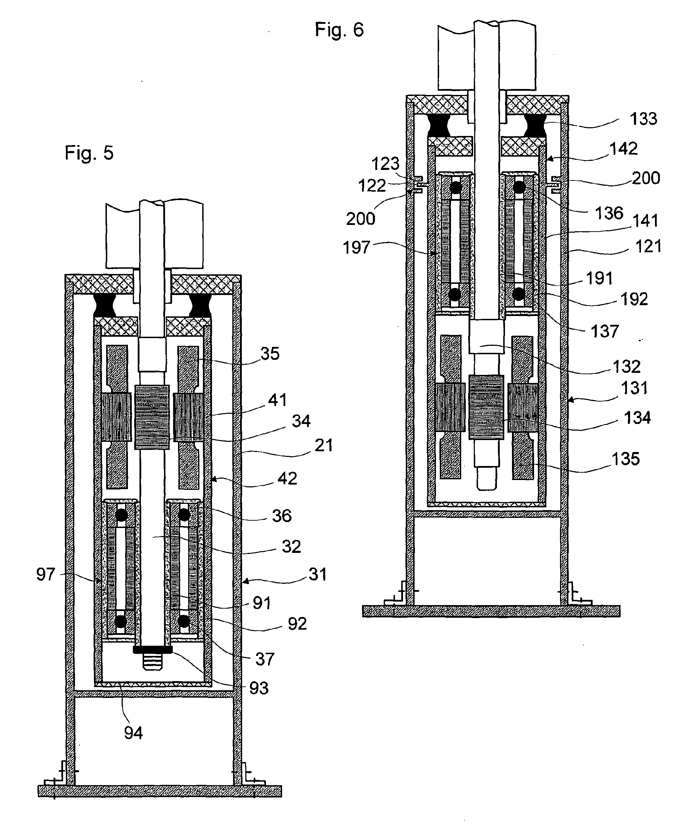

Fig. 5 zeigt einen Querschnitt durch eine zweite Ausführungsform einer erfindungsgemässen Spindelanordnung 31, welche sich von der Spindelanordnung 1 gemäss Fig. 2 durch die Anordnung der Lager 36, 37 unterscheidet, ansonsten jedoch auch weitere, an dieser Stelle nicht explizit beschriebene Merkmale der Fig. 2 enthält.

Die Spindel 42 enthält ein Spindeloberteil analog zu Fig. 2 (an dieser Stelle nicht näher gezeigt). Unterhalb des Spindeloberteils ist ein Elektromotor mit einem drehfest an einem Spindelschaft 32 angeordneten Rotor 34 und einem drehfest mit einem Lagergehäuse 41 verbundenen Stator 35 angeordnet. Das obere und untere Lager 36, 37 im Lagergehäuse 41 der Spindel 42 befindet sich unterhalb des Rotors 34 bzw. des Elektromotors. Die Spindellager 36, 37 sind als Wälzlager ausgebildet und zwischen einer inneren Gehäusewand 91 und äusseren Gehäusewand 92 angeordnet. Die beiden Lager 36, 37 bilden mit dem Gehäuse 91, 92 eine Schnellwechsel-Lagereinheit 97 aus, welche an ihrem oberen und unteren Ende über Abdeckelemente verschlossen sein kann. Die innere Gehäusewand 91 bildet einen zylindrischen Hohlraum zur Aufnahme des Spindelschaftes 32 auf. Das Lagergehäuse 41 ist als geschlossener rohrförmiger Hohlkörper ausgebildet und schliesst den Elektromotor sowie die Schnellwechsel-Lagereinheit ein.

Die Schnellwechsel-Lagereinheit 97 ist vorteilhaft mittels Form- und/oder Kraftschlussverbindung drehfest aber lösbar am Spindelschaft 32 befestigt. Die Schnellwechsel-Lagereinheit 97 kann z. B. formschlüssig auf den Spindelschaft 32 aufgeschoben und mittels einer Schraubverbindung 93 gegen ein Herausgleiten gesichert sein. Die Schraubverbindung 93 kann z. B. eine am unteren Schaftende festgelegte Schraubenmutter umfassen.

Zum Auswechseln der Schnellwechsel-Lagereinheiten 97 wird das Lagergehäuse 41 aus dem Aussengehäuse 21 ausgebaut und geöffnet, z. B. durch Entfernen der unteren Abdeckung 94. Danach wird ggf. die Schraubverbindung 93 gelöst und die defekte Schnellwechsel-Lagereinheit 97 vom Spindelschaft 32 abgezogen. Anschliessend kann eine neue Schnellwechsel-Lagereinheit 97, wie oben beschrieben, montiert werden.

Fig. 6 zeigt einen Querschnitt durch eine dritte Ausführungsform einer erfindungsgemässen Spindelanordnung 131, welche sich von der Spindelanordnung 1 gemäss Fig. 2 und der Spindelanordnung 32 gemäss Fig. 4 durch die Anordnung der Lager 136, 137 unterscheidet, ansonsten jedoch auch weitere, an dieser Stelle nicht explizit beschriebene Merkmale der Fig. 2 enthält.

Die Spindel 142 enthält ein Spindeloberteil (nicht näher gezeigt). Unterhalb des Spindeloberteils ist ein Elektromotor mit einem drehfest an einem Spindelschaft 132 angeordneten Rotor 134 und einem drehfest mit einem Lagergehäuse 141 verbundenen Stator 135 angeordnet. Das obere und untere Lager 136, 137 im Lagergehäuse 141 der Spindel 142 befindet sich oberhalb des Rotors 134 bzw. des Elektromotors. Die Spindellager 136, 137 sind als Wälzlager ausgebildet und zwischen einer inneren Gehäusewand 191 und äusseren Gehäusewand 192 angeordnet. Die beiden Lager 136, 137 bilden mit dem Gehäuse 191, 192 eine Schnellwechsel-Lagereinheit 197 aus, welche an ihrem oberen und unteren Ende über Abdeckelemente verschlossen sein kann. Die innere Gehäusewand 191 bildet einen zylindrischen Hohlraum zur Aufnahme des Spindelschaftes 132 auf. Das Lagergehäuse 141 ist als geschlossener rohrförmiger Hohlkörper ausgebildet und schliesst den Elektromotor sowie die Schnellwechsel-Lagereinheit 197 ein.

Die Schnellwechsel-Lagereinheit 197 ist vorteilhaft mittels Form- und/oder Kraftschlussverbindung drehfest aber lösbar am Spindelschaft 132 befestigt. Die Schnellwechsel-Lagereinheit 197 kann z. B. formschlüssig auf den Spindelschaft 132 aufgeschoben und mittels einer Schraubverbindung gegen ein Herausgleiten gesichert sein.

Zum Auswechseln der Schnellwechsel-Lagereinheiten 197 wird das Lagergehäuse geöffnet und die defekte Schnellwechsel-Lagereinheit 197 vom Spindelschaft 132 abgezogen. Anschliessend kann eine neue Schnellwechsel-Lagereinheit 197 wie oben beschrieben montiert werden.

Fig. 6 zeigt ferner eine Einrichtung 200 zur Begrenzung der axialen Verschiebung des Lagergehäuses 141 gegenüber dem Aussengehäuse 121 und damit zur Begrenzung der Axialbelastung der Befestigungsmittel 133. Die Begrenzungseinrichtung besteht aus am Lagergehäuse angeordneten Vorsprüngen 123 oder einem ringförmigen Flansch, welche in einer nutförmigen Vertiefung 122 am Aussengehäuse 121 geführt sind. Die Abstände zwischen der oberen bzw. unteren Wand der Vertiefung 122 und den Vorsprüngen 123 sind so eingestellt, dass diese eine störungsfreie, d.h. berührungsfreie Präzessionsbewegung zulassen, jedoch in axialer Richtung eine Bewegungsbegrenzung sowohl gegen oben als auch gegen unten sicherstellen. Auf diese Weise wird verhindert, dass die elastischen Befestigungsmittel 133 durch axiale Doffkräfte überbeansprucht werden. Die genannte Begrenzungseinrichtung 200 ist nicht auf dieses Ausführungsbeispiel beschränkt, sondern ist auch auf die andere Ausführungsbeispiele und Abwandlungen davon anwendbar.

Die Spindelanordnungen der Ausführungsbeispiele gemäss Fig. 2, 5 und 6 sind auch auf Trichter- oder Schlingenspinnmaschinen anwendbar.

## Patentansprüche

1. Spinnmaschine mit einer Spindelanordnung (1) enthaltend eine Spindel (30) mit jeweils einem Spindeloberteil (10), als Träger für eine Spinnhülse, und einem unterhalb des Spindeloberteils (10) angeordneten Einzelantrieb aus einem in einem Lagergehäuse (11) angeordneten Elektromotor mit Rotor (4) und Stator (5), wobei der Rotor drehfest auf einem Spindelschaft (2) und der Stator (5) direkt oder indirekt drehfest mit dem Lagergehäuse (11) verbunden ist, und der Spindelschaft (2) über ein oberes und unteres Lager (6, 7) im oder am Lagergehäuse (11) gelagert ist und die Spindel (30) direkt oder indirekt am Maschinengestell, insbesondere auf einer Spindelbank (15) oder einer an der Spindelbank (15) angebrachten Halterung (21), befestigt ist,
**dadurch gekennzeichnet, dass**
die Spindel (30) oberhalb des Elektromotors mittels Befestigungsmitteln (3) direkt oder indirekt am Maschinengestell (15) beweglich befestigt ist, wobei die Befestigung mit den dazugehörigen Befestigungsmitteln (3) dergestalt ist, dass diese eine um eine Kegelfläche (73) kreisende Präzessionsbewegung der Spindel (30) zulässt, wobei der die Kegelspitze ausbildende Präzessions-Drehpunkt (9, 75) auf der Höhe der Spindelbefestigung liegt.

2. Spinnmaschine nach Anspruch 1, wobei der Präzessions-Drehpunkt (9, 75) auf der Höhe oder oberhalb des Präzessionsmasse-Schwerpunktes (83) liegt.

3. Spinnmaschine nach einem der Ansprüche 1 und 2, wobei das obere Lager (6) oberhalb des Elektromotors bzw. des Rotors (4) und das untere Lager (7) unterhalb des Elektromotors bzw. des Rotors (4) angeordnet ist.

4. Spinnmaschine nach einem der Ansprüche 1 und 2, wobei das obere und untere Lager (136, 137) oberhalb des Elektromotors bzw. des Rotors (134) angeordnet sind.

5. Spinnmaschine nach einem der Ansprüche 1 und 2, wobei das obere und untere Lager (36, 37) unterhalb des Elektromotors bzw. des Rotors (34) angeordnet sind.

6. Spinnmaschine nach einem der Ansprüche 4 und 5, wobei das obere und untere Lager (36, 37; 136, 137) als vormontierte Baugruppe (97; 197) ausgebildet ist, welche über Befestigungsmittel (93) als Einheit mittels Form- und/oder Kraftschlussverbindung lösbar am Spindelschaft (32; 132) festgelegt ist.

7. Spinnmaschine nach einem der Ansprüche 1 und 6, wobei die Spindel (30) auf der Höhe oder oberhalb des oberen Lagers (6) direkt oder indirekt am Maschinengestell (15) elastisch befestigt ist.

8. Spinnmaschine nach einem der Ansprüche 1 bis 7, wobei die Befestigungsmittel elastische, insbesondere gummi- und/oder federelastische Verbindungselemente (3) enthalten.

9. Spinnmaschine nach einem der Ansprüche 1 bis 8, wobei die Spindel (30) über eine oder mehrere in einer horizontalen Ebene liegenden Befestigungsstellen am Maschinengestell befestigt ist.

10. Spinnmaschine nach einem der Ansprüche 1 bis 9, wobei die Befestigungsmittel (3) elastische Ringelemente oder Ringsegmente umfassen.

11. Spinnmaschine nach einem der Ansprüche 1 bis 10, wobei die Spindel (30) über eine als Aussengehäuse (21) ausgebildete Halterung mit der Spindelbank (15) verbunden ist, wobei die Spindel (30) mit ihrem Lagergehäuse (11) vorzugsweise konzentrisch in das Aussengehäuse (21) eingelassen ist und über die Befestigungsmittel (3) mit diesem schwenkbar verbunden ist, wobei zwischen Aussengehäuse (21) und Lagergehäuse (11) ein Zwischenraum (12) ausgebildet ist, welcher eine Präzessionsbewegung der Spindel (30) zulässt.

12. Spinnmaschine nach einem der Ansprüche 1 bis 11, wobei die Halterung (21), insbesondere das Aussengehäuse, unbeweglich mit dem Maschinengestell, insbesondere der Spindelbank (15), verbunden ist.

13. Spinnmaschine nach einem der Ansprüche 11 und 12, wobei die Spindel (30) auf der Höhe oder oberhalb des oberen Lagers (6) über die Befestigungsmittel (3) mit dem Aussengehäuse (21) verbunden ist.

14. Spinnmaschine nach einem der Ansprüche 11 bis 13, wobei das Aussengehäuse (21) in seinem unteren Abschnitt unter Ausbildung einer topfartigen Spindelaufnahme mit einem Gehäuseboden (14) verschlossen ist.

15. Spinnmaschine nach einem der Ansprüche 11 bis 14, wobei der Zwischenraum (12) zwischen Lagergehäuse (11) und Aussengehäuse (21) wenigstens im unteren Abschnitt mit einem Dämpfungsmittel (13) ausgefüllt ist.

16. Spinnmaschine nach Anspruch 15, wobei das Dämpfungsmittel (13) eine hochviskose Flüssigkeit, wie z. B. ein Dämpfungsöl, ist.

17. Spinnmaschine nach einem der Ansprüche 11 bis 16, wobei die Spindel (30) und das Aussengehäuse (21) zusammen mit den Befestigungsmitteln (3) eine, vorzugsweise geschlossene, Baueinheit ausbilden und das Aussengehäuse (21) Anbindungspunkte (27) zur unbeweglichen Befestigung des Aussengehäuses (21) am Maschinengestell (15) aufweist.

18. Spinnmaschine nach einem der Ansprüche 1 bis 17, wobei das untere und/oder obere Lager (6, 7) Wälzlager sind.

19. Spinnmaschine nach Anspruch 18, wobei das untere und/oder obere Wälzlager (6, 7) ein Hybridlager mit elektrisch nicht-leitenden Wälzkörpern, vorzugsweise aus einem nicht-Metall Werkstoff, wie Keramik oder Kunststoff, ist.

20. Spinnmaschine nach einem der Ansprüche 1 bis 19, wobei die Spindel (30) über die Befestigungsmittel (3) von unten direkt oder indirekt am Maschinengestell (15) aufgehängt ist.

21. Spinnmaschine nach einem der Ansprüche 1 bis 20, wobei die Spindel (30) an einem unbeweglichen, starren Bauteil (21) des Maschinengestells (15) befestigt ist.

22. Spinnmaschine nach einem der Ansprüche 17 bis 21, wobei Mittel zum zentrierten Festlegen der Spindelanordnung (1) am Maschinengestell (15) gegenüber der Ringbank (16) vorgesehen sind.

23. Spinnmaschine nach einem der Ansprüche 1 bis 22, wobei Begrenzungsmittel (200) zur Begrenzung der axialen Verschiebbarkeit der Spindel (142) vorgesehen sind.

24. Spindeleinheit (1), insbesondere für eine Spinnmaschine nach Anspruch 1, enthaltend eine Spindel (30) mit einem Spindeloberteil (10), als Träger für eine Garn-oder Zwirn-Hülse, und einem unterhalb des Spindeloberteils (10) angeordneten Einzelantrieb aus einem in einem Lagergehäuse (11) angeordneten Elektromotor mit Rotor (4) und Stator (5), wobei der Rotor drehfest auf einem Spindelschaft (2) und der Stator (5) direkt oder indirekt drehfest mit dem Lagergehäuse (11) verbunden ist, und der Spindelschaft (2) über ein oberes und unteres Lager (6, 7) im oder am Lagergehäuse (11) gelagert ist,
**dadurch gekennzeichnet, dass**
die Spindeleinheit (1) eine Halterung (21) enthält, und die Spindel (30) oberhalb des Elektromotors mittels Befestigungsmitteln (3) beweglich mit der Halterung (21) verbunden ist, wobei die Verbindung mit den dazugehörigen Befestigungsmitteln (3) dergestalt ist, dass diese eine um eine Kegelfläche (73) kreisende Präzessionsbewegung der Spindel (30) in oder an der Halterung (21) zulässt, wobei der die Kegelspitze ausbildende Präzessions-Drehpunkt (9, 75) auf der Höhe der Spindelbefestigung liegt.

25. Ringspinnmaschine mit einer Ringbank (16) und einer Spindelbank (15) mit wenigstens einer Spindelanordnung (1), enthaltend eine Spindel (30) mit jeweils einem Spindeloberteil (10), als Träger für eine Spinnhülse, und einem unterhalb des Spindeloberteils (10) angeordneten Einzelantrieb aus einem in einem Lagergehäuse (11) angeordneten Elektromotor mit Rotor (4) und Stator (5), wobei der Rotor drehfest auf einem Spindelschaft (2) und der Stator (5) direkt oder indirekt drehfest mit dem Lagergehäuse (11) verbunden ist, und der Spindelschaft (2) über Lager (6, 7) im oder am Lagergehäuse (11) gelagert ist und die Spindel (30) an einer direkt oder indirekt an der Spindelbank (15) angebrachten Halterung (21) befestigt ist,
**dadurch gekennzeichnet, dass**
der Spindelanordnung (1) eine Kapselung (1) zugeordnet ist, und die Kapselung (19) an der Unterseite der Ringbank (16) befestigt ist, so dass die Kapselung die Spindelanordnung unterhalb der aktuellen Kops-Fadenablage umschliesst.
